# EUROPEAN PATENT APPLICATION

(11) **EP 1 164 151 A1**
(43) Date of publication of application: **19.12.2001**
(21) Application number: 01305095.0
(22) Date of filing: 12.06.2001
(51) Int. Cl.: C08G 18/08, C08G 18/66, C08F 290/06, C08G 18/67, C09D 175/04

(54) **Aqueous resin compositions**

(30) Priority: 12.06.2000 JP 2000175478
(71) Applicant: Rock Paint Co. Ltd., Osaka (JP)
(72) Inventor: Takemori, Masanori, c/o Rock Paint Co., Ltd., Koto-ku, Tokyo (JP); Takanohashi, Yoshinori, c/o Rock Paint Co., Ltd., Koto-ku, Tokyo (JP)
(74) Representative: Lord, Hilton David

(57) **Abstract**

The present invention is intended to provide aqueous resin compositions excellent in low temperature film-forming property and stability, without intentionally adding any volatile organic compound. They are double-layered aqueous resin compositions formed by copolymerising in water emulsifiable polymeric polyurethane resin and polymeric vinyl monomer, which are excellent in low temperature film-forming property and stability due to the action of the grafted polyurethane resin component in the outer layer and with hydroxyls introduced into at least one of the polyurethane resin component and the vinyl polymer component.

## Description

### BACKGROUND OF THE INVENTION

The present invention relates to aqueous resin compositions for use as coatings, adhesives and sealings, etc. and a manufacturing method thereof.

Aqueous resin compositions provide functions as aqueous coatings or aqueous adhesives, etc., forming contiguous film in drying process. However, where the contiguous film forming conditions of aqueous resin compositions are concerned, the aqueous resin compositions which give minimum film-forming temperatures (MFT) higher than their coating work temperatures do not form contiguous film due to dysfunction, failing to exhibit adequate performance. Satisfactory film-forming property of a resin at low temperature range may be achieved by reducing the resin's Tg and adjusting its MFT to a low temperature range, but hard film is often needed from the required film performance aspect. In this instance, it is impossible to apply the method of adjusting the film's Tg to any low temperature range. Generally, there is available a method of forming the intended hard film by adding some volatile organic compound, which acts as an aid in the film forming process, and which is evaporated after forming the film. Also known is a method of averting this film-forming problem by post-bridging the low Tg, low MFT aqueous resin composition, using some bridging agent. However, because of the use of volatile organic solvents which would raise problems of environment, toxicity and odour, etc., the former method is sometimes restricted in application range from the viewpoint of environment, odour and toxicity. The latter method involves factors which would raise problems in the coating work, like the need of using costly bridging agent, mixing trouble, error and restricted usable time, etc. Besides, the aqueous resin composition comprises water as its medium, and therefore has a property of freezing at low temperature range (0°C or lower). Since cold regions require keeping and coating work conditions of aqueous resin compositions at minus temperature ranges, generally being used is a method of intentionally adding some volatile organic compound like ethylene glycol or propylene glycol for the purpose of prevention of freezing or improvement in freeze-thaw stability at low temperature range.There is no arguing the fact that these volatile organic solvents would pose as such apprehensive factors as involving environment, odor and toxicity, etc.

As compared with solvent base resin compositions, the aqueous resin compositions have environmentally and hygienically superior features in that they do not contain any volatile organic compounds. However, use of volatile organic compounds is often unavoidable for consideration of the restriction on MFT and stability in low temperature ranges. Accordingly, a method of reducing MFT and providing stability at low temperature range without impairing the required film performance is sought. The present invention is to provide aqueous resin compositions with which to solve such problems.

### BRIEF SUMMARY OF THE INVENTION

As a result of ardent studies in view of the above-described problems, the present inventors have found out the fact that a double-layered vinyl urethane emulsion of a structure having a urethane resin component in its outer layer, and a vinyl polymer component in its inner layer provides an aqueous resin composition excellent in low temperature film-forming property and freeze stability, when outer urethane resin component has non-ionic and anionic hydrophilic sites, at least either one of the urethane resin component and the vinyl polymer component has hydroxyls, which finding has lead to completion of his invention.

Thus the present invention relates to an aqueous resin composition which is obtained by polymerising a polymeric vinyl monomer in water, using an emulsifiable polymeric polyurethane resin 4 as a reactive emulsifier, thus permitting its adequate function as a coating and an adhesive to be discharged without intentionally adding any volatile organic compounds which would raise environmental, toxic and other problems, and a manufacturing method thereof.

### DETAILED DESCRIPTION OF THE PREFERRED EMBODIMENTS

The synthesizing method of the emulsifiable polymeric polyurethane resin 4 used according to this invention is realised by the reaction of isocyanate with any compound(s) having functional groups which are reactable with isocyanate. In synthesizing the herein-mentioned polyurethane resin, the urethane bonding may be formed by the reaction of hydroxyls and isocyanate, but also by reactions with other compounds containing active hydrogen, such as amine, which essentially are reactable with isocyanate, such that the resins produced are genetically called polyurethane resin in this invention.

The emulsifiable polymeric polyurethane resin 4 may be synthesized by reacting carboxyl group, sulfonic group and a glycol 1 including, for example, polyethylene glycol, etc., with diisocyanate compound 3, and thereafter introducing a polymeric vinyl monomer 2 which is reactable with isocyanate by their reaction with isocyanate, with each one side terminal isosyante group terminated with glycol or monool component. This resin makes it possible to form preemulsion from the later-described polymeric vinyl monomer 5, or to disperse in water the mixture of the polymeric polyurehtane resin 4 and the polymeric vinyl monomer 5.

Particularly, the inventions following Claim 4 permit simple preemulsification of the later-described polymeric vinyl monomers 5, or a mixture of polymeric polyurethane resin 4 and polymeric vinyl monomer 5 to be simply dispersed in water, moreover enabling manufacture of highly stable polymer, thus enabling not only the manufacturing process to be simplified without substantially requiring any emulsifier at the manufacturing time, but an emulsion resin which has very excellent stability to be manufactured.

As the glycol 1 used according to this invention which has hydrophilic property, first mentioned is a glycol having ionic groups, and specifically used are 2,2-dimethylol propionic acid, 2,2-dimethylol butanoic acid, 2,2-dimethylol butyric acid, 2,2-dimethylol valeric acid, polycaprolactone modified dimethylol propionic acid, polycaprolactone modified dimethylol butanoic acid, and a diolcarboxilic acid component formed by modifying one molecule of a compound having one acid anhydride group per one molecule, like phthalic acid anhydride, tetrahydrophthalic acid anhydride, succinic acid anhydride and trimellitic acid anhydride, with one molecule of triol like glycerine, trimethylol ethane or trimethylol propane, and another diol carboxilic acid component formed by modifying one molecule of a compound having two acid anhydride groups per one molecule like pyromellitic acid anhydride, with two molecules of diol like ethylene glycol or diethylene glycol. These compounds and components permit carboxilic groups to be introduced into the molecule of the polymeric polyurethane resin intended to have by the later-described urethane reaction, and the monool carboxylic acid formed by reacting one molecule of a compound having one acid anhydride group per one molecule with one molecule of diol like ethylene glycol or diethylene glycol permits carboxyl group to be introduced into the terminals by the later-described urethane reaction. Further diols and monools containing carboxyl groups obtained by reaction between epoxy group and carboxyl group are also usable. For example, compounds having two hydroxyls and two carboxyls in one molecule which are obtained by reacting two molecules of adipic acid with one molecule of ethylene glycol diglycidyl ether and the like compounds are also usable. One or two or more types of ionic glycol may be selected for use from among these groups.

As the glycol 1 which has hydrophilic property used according to this invention, mentioned secondly is a glycol having no ionic group, and specifically usable are non-ionic glycol like polyethylene glycol. Only if hydrophilic, polyethylene glycol having polypropylene glycol chains or tetramethylene glycol chains polymerised even in block or randomly is usable, but they need to contain one or more hydroxyls in one molecule, and for simplified synthetic method, mono- and di-ol are suitable.

Usable for the synthesis of the emulsifiable polymeric polyurethane resin used according to this invention is the above-described emulsifiable glycol 1. In providing the aqueous resin compositions intended by this application, anionic glycol manifests its effects in polymerisation stability and preservation stability, and non-ionic glycol in low temperature stability and low temperature film-forming property, respectively.

On the other hand, another glycol component la which is not hydrophilic can be used in synthesizing emulsifiable polymeric polyurethane resin. Before polymerising the polymeric vinyl monomer 5 in water, the so-called preemulsion needs to be prepared by preliminarily emulsifying the polymeric vinyl monomer, using the polymeric polyurethane resin as an emulsifier. In this process, if the polymeric polyurethane resin 4 is too strongly hydrophilic, while soluble in water, it sometimes does not allow the polymeric vinyl monomer 5 to be emulsified, or the preemulsion obtained sometimes has poor stability. Furthermore, even if the preemulsion is stable, sometimes fused particles or increased viscosity occurs during the polymerization, or lower polymerisation reaction rate and larger residue of unreacted polymeric vinyl monomer are sometimes experienced. This may be due to lack of hydrophobic segment in the molecule of the polymeric polyurethane resin. In this respect, some glycol components which are not hyrophilic can be bonded to the polymeric polyurethane resin through isocyanate compound 3.Usable as the nonhydrophilic glycol la are octanol, decanol, 2-ethyl hexanol and the like alkyl alcohol or polypropylene glycol, polytetramethylene glycol and monoalcohol materials derived from them, etc.

To be mentioned as the isocyanate compound 3 used according to this invention are aromatic, aliphatic and alicyclic diisocyanate, and specifically, 2,4-tolylene diisocyanate, 2,6-tolylene diisocyanate, 4,4-diphenylmethane diisocyanate, xylylene diisocyanate, α, α, α', α'-tetramethylxylylene diisocyanate, hexamethylene diisocyanate, isophorone diisocyanate, 1,5-tetrahydronaphthalene diisocyanate, and further their isocyanurate, burette and aduct materials, etc. One or two or more types of them selected from among these groups are usable. However, isocyanate compounds diluted with volatile organic solvents need to have their organic solvents distilled off for attainment of the objects of this application.

The reaction conditions of isocyanate with hydoxyls or functional groups other than hydroxyls which are reactable with isocyanate are not particularly limited. The reaction of isocyanate with hydoxlys may be run at any reaction temperature within 50 to 100°C, and the reaction between isocyanate and primary or secondary amines terminated at any reaction temperature within room temperature to 50°C. Further, in running these reactions, the well-known urethanisation catalysts such as dibutyltin dilaurate or dioctyltin dilaurate may be used.

The synthesis of the emulsifiable polymeric polyurethane resin 4 may be performed in no solvent system, but if stirring or workability is called into question, the resin obtained having high viscosity, the polymeric vinyl monomer may be used as the reaction solvent, with quinonic or phenolic antioxidant added in the required amount. Such polymeric vinyl monomers should virtually limited to compounds which do not react with isocyanate, and should preferably be those that have high solvency in urethane resin, such as methyl methacrylate, butyl acrylate, butyl methacrylate or the like.

The plymeric vinyl monomer 2 having functional groups which are reactable with isocyanate mentioned for use according to the invention of this application includes 2-hydroxyethyl acrylate, 2-hydroxyethyl methacryalate, 2-hydroxypropyl methacrylate, 3-hydroxypropyl methacrylate, 4-hydroxybutyl acrylate, acetoacetoxyethyl methacrylate, acrylic acid, methacrylic acid and so on. One type or two or more types selected from among these groups is or are usable, but from the reactivity standpoint, polymeric vinyl monomers having primary hydroxyls like 4-hydroxybutyl acrylate are preferable.

According to the invention of this application, hydroxyls are introduced into the polymeric polyurethane resin 4 or the vinylic polymer components for improved low temperature stability. The method of introducing hydroxyls into the urethane resin components 4 may include a method of their introduction by adding one molecule of glycol per one isocyanate functional group, using diols as introduction reagents ethylene glycol, propylene glycol, 1,4-butane diol, 1,6-hexane diol, diethylene glycol, dipropylene glycol and their oligomers, or they may be introduced by adding one molecule of polyol per one isocyanate functional group, using any polyol having three or more hydroxyls per one molecule, like trimethylolethane, trimethylolpropane and pentaerythritol. Further, mentioned is a hydroxyl-introducing method which is effective selectively and in short time, using highly reactive alkanolamine, a series of compounds having one primary or secondary amino group and one or more hydroxyls. The hydroxyl introduction is effected through urea bonding by addition of one molecule of alkanolamine per one isocyanate functional group. The alkanolamine to be mentioned includes, for example, ethanol amine, methylethanolamine and diethanolamine, etc. Usable as the hydroxyl introduction reagent into the polymeric polyurethane resin 4 is or are one type or two or more types selected from among these groups, and the molecular weight of the emulsifiable polymeric polyurethane resin 4 is from 800 to 5000, preferably from 1500 to 3500.

The polymeric vinyly monomer 5 to be mentioned for use according to the invention of this application includes methyl methacrylate, ethyl methacrylate, propyl methacrylate, isopropyl methacrylate, butyl methacrylate, isobutyl methacrylate, tert-butyl methacrylate, hexylmethacrylate, cyclohexyl methacrylate, octyl methacrylate, 2-ethylhexyl methacrylate, lauryl methacrylate, and the like alkyl methacrylates or their acrylates, and acrylonitrile, acrylamide, N,N-dimethylacrylamid, N,N-diethylacrylamide, stylene, vinyl toluene, and as polyfunctional polymeric vinyl monomer, allyl methacrylate, ethylene glycol diacrylate, 1,4-butanediol diacrylate, 1,6-hexanediol diacrylate, trimethylolpropane triacrylate, pentaerythritol pentaacrylate or their methacrylics, and divinylbenzene, etc. One type or two or more types selected from these groups may be used.

As a second hydroxyl introducing method according to the invention of this application, is there available a method of introducing hydroxyls into the polymeric vinyl monomer polymerised components from polymeric vinyl monomers having hydroxyls. The polymeric vinyl monomers having hydroxyls to be herein mentioned for use include 2-hydroxyethyl methacrylate, 2-hydroxypropyl methacrylate, 3-hydroxypropyl methacrylate, 4-hydroxybutyl methacrylate, and their acrylates. One type or two or more types selected from these groups may be used.

In performing the polymerisation in water of polymeric vinyl monomer 5 with the emulsifiable polymeric polyurethane resin 4 according to the invention of this application, the former may be used in the range of 100 to 3000 parts by weight, preferably in the range of 500 to 2000, from the viewpoint of attaining higher solid content and polymerisation stability, in proportion to the emulsifiable polymeric polyurethane resin 4 as 100 parts by weight.

As for the polymerization method, the synthesis may be performed by a method of preparing the so-called preemulsion having the polymeric vinyl monomer 5 emulsified in water, with the emulsifiable polymeric polyurethane resin 4 dissolved therein beforehand, and adding it dropwise into water together with a polymerization initiator, or by a method of adding the polymeric vinyl monomer 5 to the emulsifiable polymeric polyurethane resin 4, and then dripping this mixture into water together with a polymerisation initiator. Note that the carboxyl or sulfonic groups introduced into the polymeric polyurethane resin can be used after neutralised, and that in the preemulsion method, they may be neutralised by adding some base at the time of preemulsion preparation. When dripping the mixture of the polymeric polyurethane resin 4 and the polymeric vinyl monomer 5 into water, the base may be dissolved in the water beforehand. As the neutraliser, inorganic bases such as ammonia, lithium hydroxide, sodium hydroxide and potassium hydroxide, etc., and organic bases such as ethylamine, dimethylethanolamine, ethanolamine, diethanolamine and triethanolamine, etc. are usable. Their selection is made taking account of the stability or odour of the aqueous resin composition intended to have. One type or two or more types selected from among these groups may be used.

The amount of the base to be added should be 100% or higher, preferably 150-180%, in proportion to the acid value of the polymeric polyurethane resin.

For use herein as the polymerisation initiator, well-known free-radical initiators are usable. They include ammonium persulfate, sodium persulfate and potassium persulfate, etc. Such free-radical initiators should be used 0.3-1.0% by weight of the solid content of the intended aqueous resin composition. They should desirably be used after diluted as aqueous solution.

The polymerisation temperature should be 70-90°C, desirably in the range of 75-85°C in view of monomer residue and polymerisation stability. The polymerisation time (dripping rate) should be in the range of 2-5 hours, 2-3 hours being appropriate, if this rate permits the intended polymerisation temperature to be stably maintained, but if the dripping rate is higher than this, the trend of increasing fusion of resin on the reaction vessel is observed. The reaction is terminated by further continuing the heating and agitation until the initiator is consumed up, after ending the dripping. If unreacted polymeric monomer is still remaining, however, the polymerisation may be advanced by further adding proper amount of initiator, or particularly if the polymeric vinyl monomer is floating in air layer, the unreacted polymeric monomer may be removed by letting flow air, nitrogen gas or the like gas therethrough.

### [EXAMPLES]

In the following, preferred embodiments according to the invention of this application are described, but the invention of this application is not limited to these embodiments.

### 1-1; Method of synthesizing emulsifiable polymeric polyurethane resin:

Put into a 1L flask equipped with a thermometer, condenser, nitrogen-introducing pipe and a stirring device were 80g of polypropylene glycol (OH value=280.5), 177.6g of isophorone diisocyanate, 53.6g of dimethylolpropionic acid and 151.5g of methyl methacrylate, and the flask contents were heated and stirred in a nitrogen atmosphere at 90°C for 4 hours. Then the reaction was performed, with 26.0g of 2-hydroxyethyl methacrylate added, until the absorption of isocyanate at 2260cm⁻¹ on the IR spectrum had not diminished, and thereafter the reaction was continued, with 40.0g of polyethylene glycol (OH value=561.0) added, until the absorption of isocyanate at 2260cm⁻¹ on the IR spectrum disappeared. A methyl methacrylate solution (4)-1-1 of emulsifiable polymeric polyurethane resin was obtained by adding 100.0g of methyl methacrylate to the reaction product.

### 1-2; Method of synthesizing emulsifiable polymeric polyurethane resin:

Put into a 1L flask equipped with a thermometer, condenser, nitrogen-introducing pipe and a stirring device were 80g of polypropylene glycol (OH value=280.5), 177.6g of isophorone diisocyanate, 53.6g of dimethylolpropionic acid and 185.3g of methyl methacrylate, and the flask contents were heated and stirred in a nitrogen atmosphere at 90°C for 4 hours. Then the reaction was performed, with 26.0g of 2-hydroxyethyl methacrylate added, until the absorption of isocyanate at 2260cm⁻¹ on the IR spectrum had not diminished, and thereafter the reaction was continued, with 40.0g of polyethylene glycol (OH value=561.0) added, until the absorption of isocyanate at 2260cm⁻¹ on the IR spectrum disappeared. The reaction was further continued with addition of 6.4g of methanol, after performing the reaction for 2 hours with addition of 44.4g of isophorone diisocyanate, until the absorption of isocyanate at 2260cm⁻¹ on the IR spectrum had disappeared. A methyl methacrylate solution (4)-1-2 of emulsifiable polymeric polyurethane resin was obtained by adding 100.0g of methyl methacrylate to the reaction product.

### 1-3; Method of synthesizing emulsifiable polymeric polyurethane resin

Put into a 1L flask equipped with a thermometer, condenser, nitrogen introducing pipe and a stirring device were 80g of polypropylene glycol (OH value=280.5), 177.6g of isophorone diisocyanate, 53.6g of dimethylolpropionic acid and 133.1g of methyl methacrylate, and the flask contents were heated and stirred in a nitrogen atmosphere at 90°C for 4 hours. Then the reaction was performed, with 26.0g of 2-hydroxyethyl methacrylate added, until the absorption of isocyanate at 2260cm⁻¹ on the IR spectrum had not diminished, and thereafter the reaction was continued, with 12.4g of ethylene glycol added, until the absorption of isocyanate at 2260cm⁻¹ on the IR spectrum had disappeared. A methyl methacrylate solution (4)-1-3 of emulsifiable polymeric polyurethane resin was obtained by adding 100.0g of methyl methacrylate to the reaction product.

### 1-4; Method of synthesizing emulsifiable polymeric polyurethane resin:

Put into a 1L flask equipped with a thermometer, condenser, nitrogen introducing pipe and a stirring device were 80g of polypropylene glycol (OH value=280.5), 177.6g of isophorone diisocyanate, 53.6g of dimethylolpropionic acid and 122.1g of methyl methacrylate, and the flask contents were heated and stirred in a nitrogen atmosphere at 90°C for 4 hours. Then the reaction was performed, with 26.0g of 2-hydroxyethyl methacrylate added, until the absorption of isocyanate at 2260cm⁻¹ on the IR spectrum had not diminished, and thereafter the reaction was continued, with 6.4g of methanol added, until the absorption of isocyanate at 2260cm⁻¹ on the IR spectrum had disappeared. A methyl methacrylate solution (4)-1-4 of emulsifiable polymeric polyurethane resin was obtained by adding 100.0g of methyl methacrylate to the reaction product.

### [COMPARATIVE EXAMPLES]

### 1-5; Method of synthesizing emulsifiable nonpolymeric polyurethane resin

Put into a 1L flask equipped with a thermometer, condenser, nitrogen-introducing pipe and a stirring device were 80g of polypropylene glycol (OH value=280.5), 177.6g of isophorone diisocyanate, 53.6g of dimethylolpropionic acid and 144.0g of methyl methacrylate, and the flask contents were heated and stirred in a nitrogen atmosphere at 90°C for 4 hours. Then the reaction was performed, with 14.8g of butanol added, until the absorption of isocyanate at 2260cm⁻¹ on the IR spectrum had not diminished, and thereafter the reaction was continued, with 40g of polyethylene glycol (OH value=561.0) added, until the absorption of isocyanate at 2260cm⁻¹ on the IR spectrum had disappeared. A methyl methacrylate solution 1-5 of emulsifiable nonpolymeric polyurethane resin was obtained by adding 100.0g of methyl methacrylate to the reaction product.

### 1-6; Method of synthesizing emulsifiable nonpolymeric polyurethane resin:

Put into a 1L flask equipped with a thermometer, condenser, nitrogen introducing pipe and a stirring device were 80g of polypropylene glycol (OH value=280.5), 177.6g of isophorone diisocyanate, 53.6g of dimethylolpropionic acid and 121.6g of methyl methacrylate, and the flask contents were heated and stirred in a nitrogen atmosphere at 90°C for 4 hours. Then the reaction was performed, with 14.8g of butanol added, until the absorption of isocyanate at 2260cm⁻¹ on the IR spectrum had not diminished, and thereafter the reaction was continued, with 6.4g of methanol added, until the absorption of isocyanate at 2260cm⁻¹ on the IR spectrum had disappeared. A methyl methacrylate solution 1-6 of emulsifiable nonpolymeric polyurethane resin was obtained by adding 100.0g of methyl methacrylate to the reaction product.

### [EXAMPLE]

### 2-1; Synthesizing method of aqueous resin from emulsifiable polymeric polyurethane resin:

Into a 2L flask equipped with a thermometer, condenser, nitrogen-introducing pipe and a stirring device, was put 300g of water, with the internal temperature held at 80°C. Separately, 33.7g of the emulsifiable polyurethane resin (4)-1-1 as a polyurethane resin component and 2.5g of sodium hydroxide were put into 270g of water, and stirred until homogeneously mixed. A preemulsion was then prepared by adding thereinto while stirring 180.9g of methyl methacrylate and 180.9g of 2-ethylhexyl acrylate. This preemulsion and 32g of aqueous solution of 2.0g of sodium persulfate were dripped into the flask at a constant rate in 3 hours. The flask contents were further heated and stirred at 80°C for 3 hours.

The aqueous resin compositions using the emulsifiable polyurethane resin listed in Table 1 below were synthesized by the above-described procedure, with the amount of the polyurethane resin so determined as to adjust the acid value to 5mg KOH/g.

As for the other Examples 2-2, 2-3, 2-4, 2-1-1 and Comparable examples 2-5 and 2-6, respective aqueous resin compositions were obtained by making the polymerisation by the similar procedure to that of Example 2-1, using the polymeric vinylmonomers given in the composition table of Table 1. As for Examples 2-1-a, 2-1-b, 2-2-a, 2-2-b, 2-3-a, 2-4-a and Comparable examples 2-5-a and 2-6-a, respective aqueous resin compositions were obtained by making the polymerisation by the similar procedure to that of Example 2-1, using the polymeric vinyl monomers given in the composition table of Table 1, with 2-hydroxyethyl methacrylate added together with methyl methacrylate and 2-ethylhexyl acrylate.

### [COMPARATIVE EXAMPLE]

### 2-7:

A 2L flask was equipped with a thermometer, a condenser and a stirring device, and 300g of water, 8g of LEVENOL WZ (manufactured by Kao Corporation) were put in this flask, with the inside temperature adjusted to 80°C. Separately, with 234g of water put in a 1L container provided with a stirring device, and with 8g of LEVENOL WZ, 3.8g of EMULGEN 913 (manufactured by Kao Corporation), 6.0g of EMULGEN 909 (manufactured by Kao Corporation) and 4g of ELEMINOL JS-2 (manufactured by Sanyo Chemical Industries, Ltd.) dissolved therein, a preemulsion was prepared by adding 181.6g of methyl methacrylate, 181.6g of 2-ethylhexyl acrylate and 8g of acrylic acid thereinto, followed by well stirring. Then 32g of an aqueous solution containing the preemulsion thus obtained and 2g of sodium persulfate were added dropwise into the flask or the reaction vessel at a constant rate taking 3 hours. The reactants were further heated and stirred for 3 hours. After cooling them down to 40°C, 4g of a solution of 30% ammonia water in 20g of water was added, yielding the aqueous resin composition of Reference example 2-7-1.

As for the syntheses of Comparative example 2-7-a and Reference example 2-7-1, the aqueous resin compositions of 2-7-a and 2-7-1 were obtained by the similar operation to that of the "Comparative example" of the aforementioned 2-7, using the polymeric vinyl monomers given in Table 1 below.

**Table 1 :**

| Composition Table | | | | | |
|---|---|---|---|---|---|
| | Polyurethane resin | Amount of polyurethane resin | MMA | 2-EHA | 2-HEMA |
| Example | | | | | |
| 2-1 | (4)-1-1 | 33. 7 | 180. 9 | 180. 9 | 0 |
| 2-2 | (4)-1-2 | 38. 2 | 178. 6 | 178. 6 | 0 |
| 2-3 | (4)-1-3 | 31. 2 | 182. 1 | 182. 1 | 0 |
| 2-4 | (4)-1-4 | 30. 6 | 182. 4 | 182. 4 | 0 |
| 2-1-a | (4)-1-1 | 33. 7 | 178. 6 | 178. 6 | 4. 6 |
| 2-1-b | (4)-1-1 | 33. 7 | 176. 3 | 176. 3 | 9. 2 |
| 2-2-a | (4)-1-2 | 38. 2 | 176. 3 | 176. 3 | 4. 6 |
| 2-2-b | (4)-1-2 | 38. 2 | 174. 0 | 174. 0 | 9. 2 |
| 2-3-a | (4)-1-3 | 31. 2 | 179. 8 | 179. 8 | 4. 6 |
| 2-4-a | (4)-1-4 | 30. 6 | 180. 1 | 180. 1 | 4. 6 |

| Comparative Example | | | | | |
|---|---|---|---|---|---|
| 2-5 | 1-5 | 32. 6 | 181.4 | 181.4 | 0 |
| 2-6 | 1-6 | 29. 6 | 182. 9 | 182. 9 | 0 |
| 2-5-a | 1-5 | 32. 6 | 179. 1 | 179. 1 | 4. 6 |
| 2-6-a | 1-6 | 29. 6 | 180. 6 | 180. 6 | 4. 6 |
| 2-7 | (Acrylic acid | 8. 0) | 186. 1 | 186. 1 | 0 |
| 2 - 7 - a | (Acrylic acid | 8. 0) | 183.7 | 183. 7 | 4.6 |

| Reference Example | | | | | |
|---|---|---|---|---|---|
| 2 - 7 - 1 | (Acrylic acid | 8. 0) | 225.4 | 150.2 | 0 |

| Example | | | | | |
|---|---|---|---|---|---|
| 2-1-1 | (4) - 1 - 1 | 33. 7 | 217. 1 | 144. 2 | 0 |
| Notes; MMA represents methyl methacrylate. 2-EHA represents 2-ethylhexyl acrylate. 2-HEMA represents 2-hydroxyethyl methacrylate. | | | | | |

### EVALUATION

The aqueous resin compositions were evaluated regarding their low temperature film-forming property, low temperature stability and physical properties of film. With regard to the low temperature film-forming property, their film-forming temperature was examined by use of a thermal gradient testing apparatus (film-forming temperature measuring device) ASTM-2354-65T (manufactured by Scientific Industries Co., Ltd.). Their low temperature stability was evaluated by the stability of resin as dissolved in a 20°C atmosphere after kept at -30°C for 5 hours. Concerning their physical properties of film, tackiness and carbon contamination in a 40°C atmosphere were evaluated on film cast on a glass plate from a 15 mil doctor blade, and left intact for one week. As for example 2-1-1 and reference example 2-7-1, measurement of Tg was taken. The film for Tg measurement was formed by leaving intact at 20°C for 1 week one that was cast on a flat plate made of Teflon from a 15 mil doctor blade. The measurement was made by EXSTAR-6000 Station BMS-6100 (manufactured by Seiko Instruments Co., Ltd.).

**Table 2 :**

| Test Result | | | | |
|---|---|---|---|---|
| | M F T | Low Temperature Stability | Tackiness | Carbon Contamination |
| Example | | | | |
| 2-1 | 3 | ⓞ | 1 | 1 |
| 2-2 | 3 | ○ | 1 | 2 |
| 2-3 | 5 | ⓞ | 1 | 1 |
| 2-4 | 4 | Δ | 1 | 2 |
| 2-1-a | 6 | ⓞ | 1 | 1 |
| 2-1-b | 4 | ⓞ | 1 | 2 |
| 2-2-a | 6 | ○ | 1 | 1 |
| 2-2-b | 7 | ⓞ | 1 | 2 |
| 2-3-a | 4 | ⓞ | 1 | 2 |
| 2-4-a | 4 | ○ | 1 | 2 |

| Comparative Example | | | | |
|---|---|---|---|---|
| 2-5 | 3 | ○ | 2 | 3 |
| 2-6 | 4 | Δ | 2 | 4 |
| 2-5-a | 4 | Δ | 2 | 4 |
| 2-6-a | 5 | Δ | 2 | 4 |
| 2-7 | 5 | x | 3 | 5 |
| 2-7-a | 4 | x | 3 | 5 |

### Evaluation standards:

Respective evaluation standards on the test results given in Table 2 above are as follows:
Low temperature stability:
   Initial state restored after freeze-thaw. ··· ··· ⓞ
   Viscosity somewhat increased, but not fused after freeze-thaw. ··· ○
   Viscosity substantially increased, and fused after freeze-thaw. ··· Δ
   Not thawed at room temperature after frozen, ··· ×
Tackiness:

The tack was judged by finger touch on the film obtained in the state of having been left in a 40°C atmosphere for 3 hours.
Almost non-tacky ····· 1
Alittle tacky ····· 2
Tacky ····· 3

Evaluation on contamination resistance:

A suspension of 5 parts of carbon powder in 100 parts of water was applied on the film obtained, then this film was kept in a 40°C atmosphere for 3 hours, and thereafter the contaminated parts were cleaned. The film readily destainable was evaluated as Grade 1, and one extremely hard to destain as Grade 5

As recognised from table 2 showing the results of the Examples and Comparative examples, many of the aqueous resin compositions formed using the emulsifiable polymeric polyurethane resins (4)-1-1~(4)-1-4 are excellent in low temperature stability, particularly those containing both nonions and anions or hydroxyls in the polyurethane component being excellent. With regard to the film performances, they were confirmed to be tack-free and highly resistant to contamination. When emulsifiable nonpolymeric polyurethane resins 1-5 and 1-6 were used as Comparative examples, not only deterioration in the low temperature stability was observed, but difference in the film performances obtained, tackiness and deterioration in the contamination resistance were confirmed. Such untoward findings are believed to have resulted from the failure of the polyurethane resin component to be polymerised to have high molecular weights.

**Table 3 :**

| Test Results | | | |
|---|---|---|---|
| | MFT | Low Temperature Stability | Tg |
| Example 2-1-1 | 18 | ⓞ | 39 |
| Reference Example 2-7-1 | 24 | × | 39 |

As compared with the test results of the Reference example of Table 3, in this Example, lowered MFT without reduction of Tg is confirmed, and superior low temperature stability is indicated.

As recognised from the above-described results, there was confirmed the tendency of lowering the minimum film-forming temperature without reduction of the glass transition temperature Tg in the aqueous resin compositions thus obtained. Further, with regard to the low temperature stability, good results were achieved with polyurethane resin 4 having anionic and nonionic sites introduced, and still better results with resins having hydroxyls introduced.

Claims 1-8 of the invention of this application provides aqueous resin compositions excellent in the low temperature film-forming property and the low temperature stability, and Claim 9 the manufacturing method thereof. Therefore, the aqueous resin compositions manifest their performances that cause no trouble essentially in use, with no film-forming aids nor anti-freeze stabilisers which are volatile organic solvents intentionally added. Aqueous coatings and aqueous adhesives making use of the aqueous resin compositions obtained according to this invention are excellent materials in dealing with problems of natural environment, work environment, odor and toxicity, etc., so that their use is advantageous as upholsteries for residence, restaurant, school, hospital, etc. where volatile organic solvents are shunned.

## Claims

1. A double-layered aqueous resin composition of a structure having an emulsifiable polyurethane resin component in the outer layer, and a vinyl polymer component in the inner layer, **characterized in that** at least either one of the outer layer polyurethane resin component and the inner layer vinyl polymer component has hydroxyls.

2. A double-layered aqueous resin composition of a structure having an emulsifiable polyurethane resin component in the outer layer, and a vinyl polymer component in the inner layer, **characterized in that** the outer layer polyurethane resin component has non-ionic and anionic hydrophilic sites.

3. A double-layered aqueous resin composition of a structure having an emulsifiable polyurethane resin component in the outer layer, and a vinyl polymer component in the inner layer, **characterized in that** at least either one of the outer layer polyurethane resin component and the inner layer vinyl polymer component has hydroxyls, and further that the outer layer polyurethane resin component has non-ionic and anionic hydrophilic sites.

4. A resin composition according to either one of Claims 1 to 3, **characterised in that** the outer layer polyurethane resin component is an emulsifiable polymeric polyurethane resin (4) obtained by reacting with isocyanate (3) a glycol component (1) containing in one molecule two hydroxyls and at least one hydrophilic group and a polymeric vinyl monomer (2) having functional groups which are reactable with isocyanate, and that the inner layer vinyl polymer component is formed by polymerising in water a polymeric vinyl monomer (5) together with the aforementioned polymeric polyurethane resin (4).

5. An resin composition according to either one of Claims 1 to 3, **characterised in that** the outer layer polyurethane resin component is an emulsifiable polymeric polyurethane resin (4) obtained by reacting with isocyanate (3) a glycol component (1) containing in one molecule two hydroxyls and at least one hydrophilic group, another glycol component (la) which is not hydrophilic, but reactable with isocyanate, and a polymeric vinyl monomer (2) having functional groups which are readable with isocyanate, and that the inner layer vinyl polymer component is formed by polymerising in water a polymeric vinyl monomer (5) together with the aforementioned polymeric polyurethane resin (4).

6. A resin component according to Claim 4 or 5, **characterised in that** the hydrophilic group of the glycol component (1) containing in one molecule two hydroxyls and at least one hydrophilic group is an ionic group like carboxyl or sulphonic group that may be made hydrophilic later by neutralisation and/or a non-ionic hydrophilic group like a polyoxyethylene chain.

7. A resin composition according to either one of Claims 4 to 6, **characterised in that** the ratio by weight of the polymeric vinyl monomer (5) to the emulsifiable polymeric polyurethane resin (4) as 100 parts by weight is 100-3000 parts by weight.

8. A resin composition according to either one of Claims 4 to 7, which is obtained by reacting the glycol component (1) with a diisocyanate compound (3), holding the OH group/NCO group within a range of 1.0/1.2 to 1.0/2.0, then reacting the isocyanate at terminals of the polyurethane resin thus obtained with the polymeric vinyl monomer (2) having functional groups which are reactable with isocyanate, thereby introducing 0.5 to 1.5 molecules of polymeric vinyl group in one molecule of polyurethane resin, yielding an emulsifiable polymeric polyurethane resin (4), and thereafter reacting in water this resin with the polymeric vinyl monomer (5).

9. A manufacturing method of aqueous resin compositions **characterised in that** in manufacturing the aqueous resin composition by reacting with isocyanate (3) a glycol component containing as an indispensable component a glycol component 1 containing two hydroxyls and at least one hydrophilic group in one molecule and a polymeric vinyl monomer (2) having functional groups which are readable with isocyanate, thereby obtaining an emulsifiable polymeric polyurethane resin (4), and then polymerising this polymeric polyurethane resin (4) with a polymeric vinyl monomer (5) in water, not only hydroxyls are introduced into at least either one of the polymeric polyurethane resin (4) and the polymeric vinyl monomer (5), but the polymeric polyurethane resin (4) is provided with non-ionic and anionic hydrophilic sites.
